# DEMANDE DE BREVET EUROPEEN

(11) **EP 0 789 301 A1**
(43) Date de publication de la demande: **13.08.1997**
(21) Numéro de dépôt: 97400286.7
(22) Date de dépôt: 07.02.1997
(51) Int. Cl.: G06F 12/14, G06F 1/00

(54) **Procédé de contrôle d'accès à la base d'informations de gestion via l'infrastructure de communications d'une application ou d'un utilisateur d'une application**

(30) Priorité: 07.02.1996 FR 9601485
(71) Demandeur: BULL S.A., 78430 Louveciennes (FR)
(72) Inventeur: Pleven, Jean-Marie, 94110 Arcueil (FR); Bui-Xuan, Hoan, 75020 Paris (FR); Zhang, Didier, 92800 Puteaux (FR); Brunet, Alain, 92100 Boulogne Billancourt (FR)
(74) Mandataire: Debay, Yves

(57) **Abrégé**

La présente invention concerne un procédé de contrôle d'accès à la base d'informations de gestion appelée MIB via l'infrastructure de communications (FW) liant des applications (A, B, C, D, ...), d'une application ou d'un utilisateur d'une application donnée émettant une requête vers un ou plusieurs objets spécifiés dans un environnement de gestion distribuée. Le présent procédé est remarquable en ce que l'application ou l'utilisateur de l'application, connectée directement (A, B, C) ou indirectement (D) à l'infrastructure de communications, se voit contrôler ses droits d'accès définis dans un élément d'une liste de capacités stockée dans une base de données, une capacité étant constituée d'une classe ou d'un ensemble de classes d'objets contenant le ou les objets spécifiés et d'un ensemble d'opérations autorisées et ordonnées, l'opération correspondant à la requête émise et, si elle est autorisée, étant à effectuer sur des instances du ou des objets spécifiés de ladite classe d'objets, les objets traités étant de nature hétérogène.

## Description

La présente invention concerne un procédé de contrôle d'accès à la base d'informations de gestion via l'infrastructure de communications liant des applications, d'une application ou d'un utilisateur d'une application donnée émettant une requête vers un ou plusieurs objets spécifiés dans un environnement de gestion distribuée.

De manière générale, un environnement de gestion distribuée permet d'intégrer la gestion des systèmes, des réseaux et des applications utilisateur. Les applications de gestion sont conçues de manière à avantageusement dissimuler à l'utilisateur les étapes détaillées nécessaires pour effectuer des travaux de gestion et garantir l'intégrité des informations de gestion. Ces applications gèrent des objets en utilisant des interfaces claires et concises avec les services communs de gestion. Les services communs de gestion permettent de simplifier le développement des applications de gestion. Des services "bases d'informations de gestion", appelés couramment par l'homme du métier MIB (Management Information Base), permettent aux applications de gestion de manipuler lesdites informations de gestion, ces services utilisent, de préférence, les normes applicables comme les normes OSI CMIS/CMIP (Open Systems Interconnection Common Management Information Services/Common Management Information Protocol) et Internet SNMP (Simple Network Management Protocol). Un objet géré est, dans cet environnement informatique, une représentation de ressources telles qu'une machine, un fichier, un périphérique, un utilisateur, une application, etc.. Une MIB qui est en fait un ensemble d'objets représente les différentes ressources à administrer dans un système. Un objet d'une MIB est défini par une classe d'objets (correspondant à un type d'objet) et une instance de cette classe d'objets. Une requête est émise par une application en vue de consulter et/ou de modifier un objet de la MIB, elle est caractérisée par le type d'opération à appliquer sur un ou plusieurs des objets de la MIB. Les services de sécurité de l'informatique distribuée sont composés de fonctions qui complètent celles fournies par les plates-formes ou applications individuelles. Les services de sécurité des systèmes d'exploitation doivent respecter des normes établies qui comprennent, entre autres, le contrôle d'accès qui permet de n'accorder un accès déterminé qu'à des utilisateurs autorisés. En fait, l'administrateur d'une ressource accorde des droits d'accès à cette ressource à des utilisateurs spécifiés. Un tel mécanisme permet de contrôler quelle type d'action peut être exécutée et sur quelle ressource. Dans ces conditions, les services de sécurité contrôlent tous les accès à l'ensemble du système d'information afin de préserver son intégrité et sa confidentialité dans le réseau au niveau requis.

De manière plus particulière, l'exploitation efficace d'un tel environnement de gestion distribuée implique une architecture flexible qui autorise une administration aisée de différentes sortes d'objets. Au centre de cette architecture se trouve l'infrastructure de communications (appelée également "framework" par l'homme du métier) dont l'objet est de gérer et d'aiguiller toute communication à l'intérieur dudit environnement de gestion distribuée. Dans cet environnement donc, tout composant ou application qui communique avec un autre composant ou une autre application le fait par l'intermédiaire et en utilisant l'infrastructure de communications dont le rôle principal est d'aiguiller ou de "router" les requêtes en provenance d'applications vers les gestionnaires d'objets adéquats.

Jusqu'à présent, dans les différents procédés exploités, ce type d'opérations de mise en communication était effectué sans que l'infrastructure de communications n'exerce le moindre contrôle, c'est-à-dire qu'une quelconque application pouvait émettre une quelconque requête à destination d'un quelconque objet. Force est de constater que cette situation est extrêmement préjudiciable et a pour principal inconvénient de ne pouvoir garantir l'intégrité et la confidentialité des informations relatives aux objets ainsi accédés.

La présente invention a pour but de remédier à cet inconvénient retrouvé dans les différents procédés de l'art antérieur et propose un procédé dans lequel un contrôle d'accès est exercé via l'infrastructure de communications non seulement concernant les applications, les utilisateurs et les objets à accéder mais aussi concernant les différentes opérations à effectuer sur lesdits objets et ceci, de manière aisée et efficace.

Pour cela, le procédé de contrôle d'accès à la base d'informations de gestion via l'infrastructure de communications mentionné dans le préambule est remarquable en ce que l'application ou l'utilisateur de l'application, connectée directement ou indirectement à l'infrastructure de communications, se voit contrôler ses droits d'accès définis dans un élément d'une liste dite de capacités stockée dans une base de données, une capacité étant constituée d'une classe ou d'un ensemble de classes d'objets contenant le ou les objets spécifiés et d'un ensemble d'opérations autorisées et ordonnées, l'opération correspondant à la requête émise et, si elle est autorisée, étant à effectuer sur des instances du ou des objets spécifiés de ladite classe d'objets, les objets traités étant de nature hétérogène.

Ainsi, selon l'idée de l'invention et ceci contre toute attente, à partir de l'infrastructure de communications tout accès à un quelconque objet peut être contrôlé, puisqu'un contrôle d'accès à la base d'informations de gestion via l'infrastructure de communications d'un utilisateur d'une application, directement ou indirectement connectée à ladite infrastructure de communications, est effectué au niveau exact d'un objet ou d'un ensemble d'objets précisément déterminés et appartenant à une quelconque classe répertoriée dans la base de données, mais également au niveau de chaque opération désirée réalisée, selon la requête émise, sur des instances d'un ou plusieurs desdits objets déterminés. Ceci est autorisé du fait que sont utilisées toutes les caractéristiques de finesse et de précision présentées par un protocole administratif, par exemple le protocole CMIP avec ses fonctions particulières. Avec ce procédé et avec le protocole CMIS/CMIP qui permet d'aider efficacement à l'unification d'un ensemble d'objets à traiter, un quelconque ensemble d'objets hétérogènes peut être avantageusement et aisément administré alors qu'auparavant, avec les procédés de l'art antérieur, chaque protocole nécessitait une application particulière.

Avantageusement, le procédé de contrôle d'accès à la base d'informations de gestion via l'infrastructure de communications est remarquable en ce que l'application ou l'utilisateur d'une application directement connectée à l'infrastructure de communications est identifié soit au moyen de son adresse et de son identifiant, soit au moyen de son nom répertorié par un service de nommage, autorisant, lorsque l'utilisateur est reconnu, la connection et l'accès aux droits définis dans la base de données.

Egalement de manière avantageuse, le procédé de contrôle d'accès à la base d'informations de gestion via l'infrastructure de communications est remarquable en ce que, dans le cas où une première application est indirectement connectée à l'infrastructure de communications par l'intermédiaire d'une seconde application directement connectée à l'infrastructure de communications sous un nom particulier, les requêtes et les réponses aux requêtes transitant par la seconde application, si la seconde application travaillant alors pour la première application donne avec l'émission de la requête l'identité de l'utilisateur de la première application, l'infrastructure de communications contrôle la requête comme si cette première application avait envoyé directement ladite requête, alors que si la seconde application ne précise pas, dans la requête, l'identité de la première application, l'infrastructure de communications réalise le contrôle en utilisant les droits par défaut d'un utilisateur de la seconde application si cet utilisateur est défini tandis que si ce dernier n'est pas défini, l'infrastructure de communications réalise ce contrôle en utilisant les droits d'un utilisateur particulier appelé "autre utilisateur" si ce dernier est défini dans la base de données.

Il apparaît donc qu'une application ou un utilisateur de l'infrastructure de communications peut être défini de deux manières différentes. Selon une première manière, il peut être défini par un couple d'informations transmis lors de la demande de connexion et constitué par son adresse et son identifiant, par exemple le couple (ip, uid) dans lequel ip est l'adresse Internet à laquelle tourne l'application et uid est un nombre identifiant l'utilisateur d'un système hôte pour lequel tourne l'application. Selon une seconde manière, il peut être défini simplement par un nom lorsque l'application utilisant l'infrastructure de communications ne possède pas ce couple, adresse et identifiant, ou s'il n'est pas désiré l'utiliser. Toutes les définitions des utilisateurs de l'infrastructure de communications ainsi que leurs droits relatifs sont stockés dans une base de données, de manière à ce que, lorsqu'une application demande à être connectée à l'infrastructure de communications, cette dernière puisse vérifier l'existence de l'identité de l'utilisateur dans ladite base de données pour accepter ou interdire, si l'identité n'est pas trouvée, la connexion. En outre, une application peut être identifiée au moyen de son nom répertorié dans un service de nommage, par exemple "l'Aptitle" défini dans les normes ISO X500. Ainsi, le nom connu du service de nommage et désigné par "Aptitle" par l'homme de métier est en fait le titre de l'application et peut être constitué d'une chaîne de caractères, d'un numéro, d'un nom, etc.. Pour préciser, la fonction du service de nommage est d'assurer la mise en correspondance d'objets ou de noms orientés utilisateur d'un environnement d'informatique distribuée et d'entrées orientées informatique dans une base de données répartie. Les objets à nommer sont des entités comme des pays, des organisations, des personnes, des groupes, des fonctions dans une organisation, des ordinateurs, des imprimantes et des fichiers, des processus et d'autres services applicatifs. Outre le fait qu'un service de nommage permet d'augmenter significativement les performances en accroissant efficacité et vitesse, il donne aussi la possibilité d'ajouter aisément des domaines locaux ou éloignés, c'est-à-dire de s'adapter à des grands réseaux et/ou des petits réseaux.

En outre, de manière remarquable, selon le procédé de contrôle d'accès à la base d'informations de gestion via l'infrastructure de communications, chaque requête émise est testée relativement aux droits d'accès de l'utilisateur d'une application ou d'une application, ce test consistant à vérifier le type de la requête et son niveau dans une suite ordonnée de requêtes, la classe d'objets requise qui peut être être une classe autorisée ou une classe appartenant à l'ensemble des classes autorisées défini dans une capacité et l'appartenance de l'instance d'objets requise à un ensemble d'instances d'objets autorisé appelé domaine.

En effet, il peut être, à cet endroit, précisé qu'il existe deux types d'utilisateurs de l'infrastructure de communications, l'utilisateur dit privilégié qui peut accéder sans aucune restriction à tous les objets et l'utilisateur dit normal, identifié, comme cela a été vu précédement, soit par le couple adresse et identifiant, soit par un nom, cet utilisateur dit normal ne pouvant accéder qu'à un ensemble prédéterminé d'objets définis dans la base de données. L'existence de l'utilisateur dit privilégié est nécessaire à la configuration des droits d'accès dans l'infrastructure de communications, en particulier, lors de la première initialisation, cet utilisateur est implicitement déclaré au sein de l'infrastructure de communications. L'infrastructure de communications peut ainsi déduire, des informations stockées dans cette base de données, que l'utilisateur dit normal peut accéder à:
- une liste de classes ou d'ensemble de classes d'objets autorisées,
- la capacité, sachant que pour chaque classe ou ensemble de classes d'objets, il correspond des ensembles d'instances de classes d'objets regroupés en domaines auxquels l'utilisateur normal a le droit d'accéder et des opérations permises sur ces objets, opérations par exemple du type CMIS comme l'application des fonctions: Get, Get scopé, Set, Set scopé, Action, Action scopée, Create, Delete, Delete scopé, le terme "scopé" signifiant ici que la fonction concernée est appliquée avec une portée ou une profondeur différente de celle de l'objet spécifique de la base et par conséquent à un, plusieurs ou tous les objets contenus dans le sous-arbre de la base d'informations de gestion (MIB) à partir de l'objet de base requis. La capacité est donc constituée d'une classe d'objets, des domaines qui y sont relatifs et de l'opération (par exemple CMIS) permise appliquée avec précision à une sélection d'objets.

Ainsi, les droits d'accès d'un utilisateur normal sont définis au moyen d'une liste de capacités comme ci-dessus déterminée. De cette manière et grâce à ces règles, l'infrastructure de communications peut contrôler finement toutes les requêtes émises par un utilisateur normal.

Un utilisateur de l'infrastructure de communications peut, comme cela a été dit ci-avant, être identifié par l'intermédiaire d'un nom. Ce cas peut correspondre à une première application qui émet des requêtes vers l'infrastructure de communications pour le compte d'une seconde application. En effet, si la seconde application n'est pas exécutée pour un utilisateur de l'infrastructure de communications (ce dernier n'étant pas identifié par un nom ou un couple, adresse et identifiant (ip, uid)), l'infrastructure de communications ne peut identifier l'utilisateur de cette seconde application, aussi dans ce cas particulier, l'infrastructure de communications devra utiliser des droits d'accès par défaut identifiés par un nom de la manière suivante, en sachant que la première application travaillant pour la seconde doit se connecter à l'infrastructure de communications au moyen du dit nom:
- si ledit nom existe et correspond à un utilisateur de l'infrastructure de communications spécifié dans la base de données, l'infrastructure de communications utilise les droits associés à cet utilisateur pour contrôler les requêtes émises par cette application. L'utilisateur de l'infrastructure de communications qui est identifié par ce nom est appelé "utilisateur par défaut" de la première application. Ce nom permettant à la première application de se connecter sert de nom pour l'utilisateur par défaut de la première application,
- si ledit nom n'existe pas dans la base de données, l'infrastructure de communications utilise les droits d'un utilisateur particulier appelé "autre utilisateur" existant dans la base de données.

De cette manière, tout utilisateur ou toute application peut être identifié et directement ou indirectement connecté à l'infrastructure de communications pour traiter de manière sélective et précise différents objets hétérogènes.

De plus de manière particulière, selon le procédé de contrôle d'accès à la base d'informations de gestion via l'infrastructure de communications, chaque requête émise est testée relativement aux droits d'accès des utilisateurs, ces droits étant définis de façon non énumérative sur des classes non encore connues et des instances non encore découvertes de telle manière que:
- les classes d'objets testées ou un ensemble de classes d'objets testées aient un radical commun et notamment la classe* (classe étoile) désignant toutes les classes existantes et à venir, le radical commun étant, par définition, la relation de nommage dans l'arbre d'enregistrement des identifieurs (appelé "registration tree" par l'homme du métier) dont sont extraites les classes,
- un domaine d'instances d'objets soit défini comme un ensemble d'instances d'objets existants et à venir appelé domaine* (domaine étoile),
- par la définition d'une requête scopée sur un domaine, un utilisateur d'une application ait accès à toutes les instances d'objets appartenant à ce domaine mais aussi aux instances d'objets qui sont hiérarchiquement inférieures relativement auxdites instances d'objets appartenant à ce domaine dans la base d'informations de gestion.

Les différentes caractéristiques ci-dessus énoncées et revendiquées seront bien comprises en se reportant aux différents exemples donnés dans la suite et en particulier à l'exemple de capacités d'utilisateurs qui y est fourni.

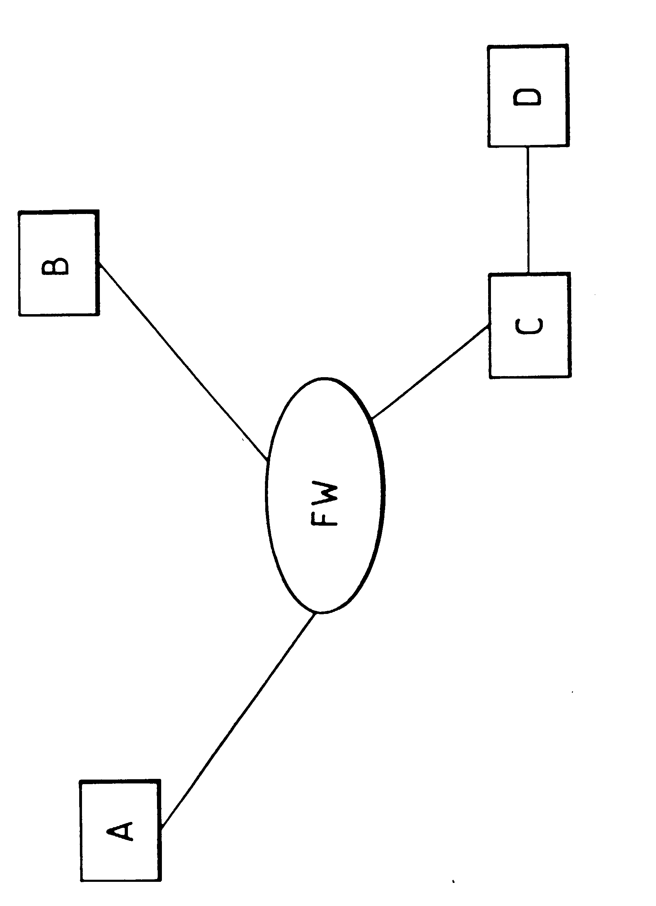

La description suivante en regard du dessin annexé, le tout donné à titre d'exemple non limitatif, fera bien comprendre comment l'invention peut être réalisée.

Sur la figure unique est représenté de manière très schématique un exemple d'environnement pour le dialogue entre diverses applications A, B, C, D par l'intermédiaire d'une infrastructure de communications FW effectuant donc, pour autoriser ce dialogue, un contrôle et un test uniques avant d'aiguiller les requêtes vers la destination requise et en particulier vers la base d'informations de gestion MIB représentant les différents objets à administrer. Il est ici rappelé que le rôle principal de l'infrastructure de communications est de "router" les requêtes vers les gestionnaires d'objets (appelés aussi par l'homme du métier agents intégrateurs) adéquats.

En mode "contrôle d'accès", l'infrastructure de communications FW contrôle l'application (A, B, C, D, ...,) lors de la demande de connexion, application qui émet des requêtes vers l'infrastructure de communications. Une application connectée à l'infrastructure de communications est identifiée comme un utilisateur ayant des droits d'accès pour une opération donnée à des ensembles d'objets déterminés. Plus précisément, une application connectée à l'infrastructure de communications s'identifie à partir de son identifiant, par exemple "l'Aptitle" défini dans les normes ISO X500, l'infrastructure de communications déduisant les droits d'accès à la base d'informations de gestion. Dans ce mode, une requête émise par une application peut donc être rejetée ou acceptée selon les droits d'accès définis pour cette application dans une base de données. Il existe, de plus, deux types d'exploitation de ce mode "contrôle d'accès", un premier type dit "faible" pour lequel toutes les requêtes sont contrôlées par l'infrastructure de communications à l'exception des requêtes de consultation de type Get et un second type dit "fort" pour lequel toutes les requêtes, sans distinction, sont contrôlées par l'infrastructure de communications.

Une fois que l'infrastructure de communications est correctement initialisée, elle vérifie si une application peut lui être ou non connectée et ceci de la manière suivante:
- si l'application tourne pour un utilisateur privilégié alors la connexion est acceptée,
- si l'application tourne pour un utilisateur normal qui est répertorié dans la base de données, la connexion peut être soit acceptée, soit rejetée en fonction des droits définis pour cet utilisateur.

Il est à noter que durant la phase d'initialisation, qui consiste à initialiser la base de données, aucune connexion d'application ne peut être acceptée.

Ensuite, une fois connectée à l'infrastructure de communications, l'application peut émettre des requêtes vers cette dernière. Les requêtes contrôlées par l'infrastructure de communications sont du type Get, Set, Action, Create, Delete.

Lorsqu'une requête est acceptée, le traitement normal de l'infrastructure de communications consiste alors à "router" cette requête. Par contre, dans le cas où cette requête est rejetée, l'infrastructure de communications renvoie en réponse un message "erreur locale" ("local error") vers l'application indiquant la nature de l'erreur et génère un message "d'échec" ("event violation") qui indique que cette requête a été rejetée par l'infrastructure de communications afin d'archiver les violations de droits d'accès.

De manière généralisée, l'infrastructure de communications contrôle une requête comme suit:
- si l'application tourne pour un utilisateur privilégié, la requête est acceptée en notant cependant qu'un traitement de contrôle particulier est effectué pour une application, telle que C, travaillant pour une autre application, comme D, ce cas sera explicité ci-après,
- si l'application tourne pour un utilisateur normal, la requête est acceptée si il existe une capacité relative audit utilisateur normal qui vérifie les conditions suivantes: la classe d'objets est la classe d'objets définie dans la capacité, l'instance d'objet existe dans un des domaines associés à la capacité et l'opération est autorisée dans la capacité,
- si l'infrastructure de communications est en mode "contrôle d'accès" de type dit "faible" et que la requête est une requête de consultation de type Get (exception au contrôle), cette requête est acceptée.

L'appellation "application travaillant pour une autre application" signifie qu'une application intermédiaire, application C sur la figure, connectée directement à l'infrastructure de communications FW, émet des requêtes pour le compte d'une autre application, application D sur la figure, les résultats et réponses aux requêtes émises étant ensuite retransmis par l'application C à l'application D. Ainsi, l'application C peut contrôler si l'application D a le droit d'émettre la (ou les) requête(s) à destination des objets concernés ou à défaut laisser l'infrastructure de communications contrôler si ce droit existe ou non. Si l'infrastructure de communications réalise ce contrôle:
- l'application C doit se déclarer comme étant une application travaillant pour l'application D, en d'autres termes, l'infrastructure de communications FW doir savoir que l'application C travaille pour d'autres applications et en particulier dans le cas de la présente figure pour l'application D, ainsi, l'application C est connue de l'infrastructure de communications comme une application spéciale ayant le droit d'émettre des requêtes pour le compte d'une autre application,
- l'application C doit être lancée par un utilisateur privilégié et se connecter à l'infrastructure de communications au moyen d'un nom,
- l'application C peut donner avec l'émission de la requête et dans la requête l'identité (l'identité de l'utilisateur de l'infrastructure de communications) de l'application D. Par conséquent, l'infrastructure de communications contrôle la requête comme si l'application D lui avait envoyé directement ladite requête. Lorsque l'application C ne précise pas, dans la requête, l'identité de l'application D, alors l'infrastructure de communications réalise le contrôle en utilisant les droits par défaut d'un utilisateur de l'application D si cet utilisateur est défini et lorsque ce dernier n'est pas défini, l'infrastructure de communications réalise ce contrôle en utilisant les droits d'un utilisateur particulier appelé "autre utilisateur" si ce dernier est défini dans la base de données.

L'application C doit donc indiquer à l'infrastructure de communications qu'elle travaille pour d'autres applications, elle peut le faire de deux manières différentes:
- de manière statique: ajouter l'indicateur YES_CONTROL_ACCESS_ID (défini ci-après) dans le fichier de caractéristiques de gestionnaires d'objets de l'application C, appelé dans la suite fichier "omc". Le nom de l'utilisateur par défaut de l'application est le nom du gestionnaire défini dans le fichier "omc",
- de manière dynamique: émettre une requête d'action vers l'infrastructure de communications indiquant le nom pour la connexion de l'application C et le nom de l'utilisateur par défaut de l'application C.

Dans le cas d'une déclaration statique, le fichier "omc" est utilisé pour déclarer un gestionnaire d'objets. Le paramètre ACTL_FLAGS, relatif aux indicateurs de contrôle d'accès, peut être ajouté et est optionnel. Deux indicateurs sont définis pour le contrôle de l'infrastructure de communications, ils sont appelés, dans cet exemple, YES_GET_REQUESTOR_ID et YES_CONTROL_ACCESS_ID et peuvent être utilisés ensemble ou séparément. La déclaration d'une application utilisant le contrôle de l'infrastructure de communications se fait comme suit:

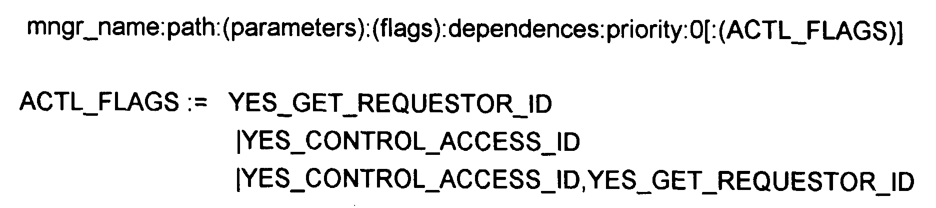

L'indicateur YES_CONTROL_ACCESS_ID signale à l'infrastructure de communications que l'application se connectant avec le nom du gestionnaire "mngr_name" travaille pour d'autres applications. Le nom "mngr_name" est également utilisé comme nom d'utilisateur par défaut de l'application.

L'indicateur YES_GET_REQUESTOR_ID signale à l'infrastructure de communications que lorsque l'application reçoit une requête, il doit lui être fourni l'identifiant de l'utilisateur de l'infrastructure de communications demandeur de cette requête.

Les exemples suivants permettent d'illustrer l'utilisation de ces indicateurs:

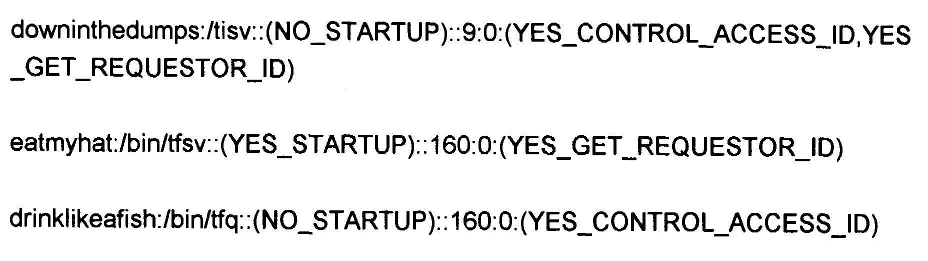

Dans le second cas de déclaration, une application peut fournir à l'infrastructure de communications des paramètres de contrôle d'accès de manière dynamique. Ces paramètres sont similaires à ceux définis dans le fichier "omc". Pour déclarer dynamiquement une application avec des paramètres d'accès à l'infrastructure de communications, il est nécessaire d'émettre une requête d'action avec lesdits paramètres énumérés ci-après et contenus dans l'argument appelé "actionlnfo":
- nom du gestionnaire,
- nom de l'utilisateur de l'application par défaut,
- options (YES_CONTROL_ACCESS_ID YES_GET_REQUESTOR_ID).

La syntaxe précise (Asn 1) de l'argument "actionlnfo" et le format de la requête d'action seront explicités plus loin.

Une application travaillant pour une autre application, peut requérir la connaissance de l'identifiant du demandeur de la requête reçue. Par conséquent, lorsque l'infrastructure de communications reçoit une requête et que cette requête est à destination d'une application qui a besoin de connaître le demandeur de cette requête, l'infrastructure de communications ajoute l'identifiant du demandeur à la requête avec l'argument de contrôle d'accès.

Pour résumer, comme cela a été exprimé précédement, statiquement, une application demandant l'identifiant du requérant peut être déclarée en ajoutant au fichier "omc" l'indicateur YES_GET_REQUESTOR_ID, alors que dynamiquement, une requête d'action doit être émise vers l'infrastructure de communications avec le paramètre YES_GET_REQUESTOR_ID dans l'argument "actionlnfo".

Le contrôle d'une application C travaillant pour une autre application D nécessite un traitement particulier par l'infrastructure de communications de l'application C. Pour chaque requête émise par l'application C, l'infrastructure de communications essaie d'obtenir l'identification de l'utilisateur pour lequel ladite application C travaille, cette identification de l'utilisateur étant contenue dans l'argument de la requête de contrôle d'accès. Si l'argument de la requête de contrôle d'accès se trouve être dans un format de contrôle d'accès de l'infrastructure de communications (syntaxe Asn 1 comme décrit dans la suite), il peut comporter une identification de l'utilisateur telle que le couple (ip, uid).

Le contrôle de l'infrastructure de communications se fait de la manière suivante. Si l'argument de la requête de contrôle d'accès ne se trouve pas dans la requête reçue, alors il est appliqué un traitement par défaut. Si l'utilisateur par défaut de l'application C n'est pas déclaré dans la base de données alors:
- les droits d'accès d'un "autre utilisateur", si ce dernier est déclaré, sont pris en compte par le contrôle de l'infrastructure de communications,
- si un "autre utilisateur" n'est pas déclaré, la requête est rejetée.

Si par contre, l'utilisateur par défaut de l'application C est déclaré dans la base de données alors, les droits d'accès de cet utilisateur par défaut sont pris en compte par le contrôle de l'infrastructure de communications, ceci terminant le traitement par défaut.

Dans le cas où l'argument de la requête de contrôle d'accès est conforme à la syntaxe de l'infrastructure de communications (par exemple syntaxe Asn 1), alors, dans l'hypothèse où le paramètre de contrôle d'accès contient l'identification de l'utilisateur, par exemple le couple (ip, uid), les droits d'accès de cet utilisateur identifié par ce couple sont utilisés par le contrôle de l'infrastructure de communications tandis que si l'utilisateur n'est pas déclaré, la requête est rejetée. Par contre, dans l'hypothèse où le paramètre de contrôle d'accès ne contient pas l'identification de l'utilisateur (ici le couple (ip, uid)), le traitement par défaut est appliqué. De même, si l'argument de la requête de contrôle d'accès n'est pas conforme à la syntaxe (par exemple Asn 1) de l'infrastructure de communications, le traitement par défaut est appliqué.

Lors de l'envoi de la requête vers le destinataire de l'application, si cette requête est acceptée, l'infrastructure de communications définit, avec le traitement de "routage", vers quelle application cette requête va être envoyée et suivant le destinataire, l'argument de la requête de contrôle d'accès va être ou ne pas être modifié de la façon suivante:
- si le destinataire a besoin de l'identification du demandeur de la requête et dans l'hypothèse où l'argument de la requête de contrôle d'accès est conforme à la syntaxe de l'infrastructure de communications (par exemple syntaxe Asn 1), aucune modification n'est réalisée, l'argument de la requête reçue est envoyé comme il a été reçu, alors que dans l'hypothèse inverse, l'identification du demandeur de la requête contenue dans le contrôle d'accès est ajoutée,
- si le destinataire n'a pas besoin de l'identification du demandeur de la requête et dans l'hypothèse où l'argument de la requête de contrôle d'accès est conforme à la syntaxe de l'infrastructure de communications (par exemple syntaxe Asn 1), l'identification du demandeur de la requête contenue dans le contrôle d'accès est supprimée, alors que dans l'hypothèse inverse, aucune modification n'est réalisée, l'argument de la requête reçue est envoyé comme il a été reçu.

Différents "échantillons" d'analyses peuvent être obtenus avec l'analyse de l'infrastructure de communications. Ainsi, lorsque le contrôle de l'infrastructure de communications est correctement initialisé, le message suivant apparaît:
- cdsp_cdsp : [15] init.

Lorsqu'une application se connecte, les messages suivants peuvent apparaître, le premier signifiant que l'accès est refusé et le second que l'utilisateur n'existe pas dans la table d'utilisateurs:
- cdsp_cdsp : [4] open !! access control : REFUSED [RC=-1804] : uid=3028 ip=129.182.54.82,
- cdsp_cdsp : [22] message !! [RC=-1803].

Lorsqu'une application émet une requête, les messages suivants peuvent apparaître:
- cdsp_cdsp : [19] invoke >> [NORMAL user] control on uid=3028 : ip=129.182.54.82: pour un utilisateur "normal",
- cdsp_cdsp : [19] invoke => access control -> request ACCEPTED [capacity=1] [instance=0]: pour signifier que la requête est acceptée,
- cdsp_cdsp : [14] invoke => [PRIVILEDGED user] request accepted: pour signifier que la requête est acceptée pour un utilisateur "privilégié",
- cdsp_cdsp : [19] invoke => access control Argument is absent: pour signifier que l'argument de contrôle d'accès est absent.

Suivent à présent quelques exemples de capacités qui peuvent être données par un administrateur de l'environnement de gestion distribuée à un utilisateur de l'infrastructure de communications:
- accès à partir de n'importe quelle opération, par exemple de type CMIS, à tous les objets d'une base d'informations de gestion (MIB) de l'environnement de gestion distribuée,
- accès en lecture, seulement pour une opération de type Get, à tous les objets d'une base d'informations de gestion (MIB) de l'environnement de gestion distribuée,
- accès à des objets d'une famille de classes: tous les objets d'une classe d'objets gérés commençant par un identifiant d'objet précis, par exemple: {1.3.12.2.1009.*},
- accès à toutes les instances d'objets d'une classe d'objets gérés,
- accès à une classe d'objets gérés, mais pour des instances d'objets particulières (domaines),
- accès à une instance d'objets d'une classe d'objets gérés pour des opérations de type Get ou Action seulement,
- accès au moyen d'opérations de type CMIS non scopées sur des objets gérés , l'utilisateur de l'infrastructure de communications n'ayant accès qu'aux objets de base,
- accès au moyen d'opérations de type CMIS scopées sur des objets gérés , l'utilisateur de l'infrastructure de communications ayant accès à un sous-arbre sous un objet.

Pour une meilleure appréhension de la mise en oeuvre de l'invention, à cet endroit et dans la suite, un exemple précis de syntaxe, la syntaxe Asn 1, ainsi que le format d'une requête d'action sont explicités. Dans la suite aussi, l'abréviation "ism" correspond à l'appellation de l'environnement de gestion distribuée.

L'argument du contrôle d'accès à la base d'informations de gestion via l'infrastructure de communications peut contenir le couple (ip, uid) pour identifier le demandeur de la requête qui dans cet exemple est une requête de type CMIS. Il peut également contenir le contrôle d'accès de l'utilisateur.

Ainsi et dans ce cas, l'argument du contrôle d'accès à la base d'informations de gestion via l'infrastructure de communications dans la requête (CMIS) est conforme à la syntaxe Asn 1 suivante:
FmkAccesControl ::= EXTERNAL

Plus précisément, les champs et les valeurs Asn 1 pour le contrôle d'accès à l'infrastructure de communications sont les suivants:

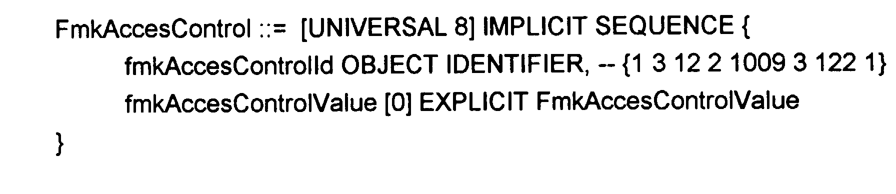

II peut être ici noté que l'identifiant d'objet {1 3 12 2 1009 3 122 1} indique que la valeur "fmkAccesControlValue" doit être dans le format de l'infrastructure de communications. 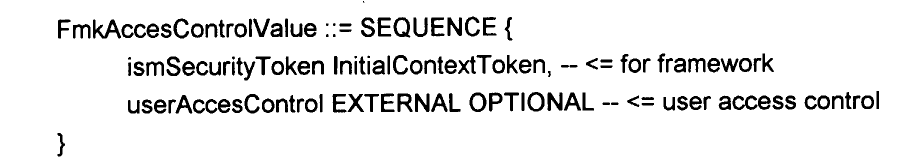 avec,

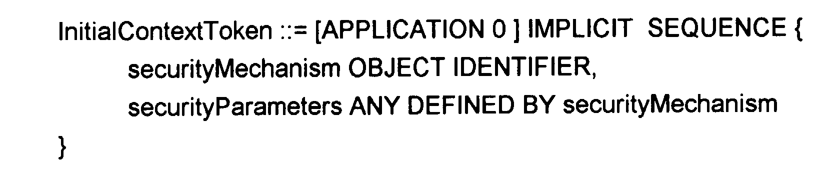

Si le mécanisme de sécurité "securityMechanism" = {1 3 12 2 1009 3 122 2}, alors le champ paramètres de sécurité "securityParameters" suit la syntaxe suivante:

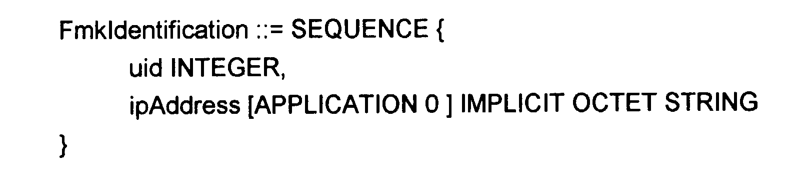

Si le mécanisme de sécurité "securityMechanism" = {1 3 12 2 1009 3 122 58}, alors le champ paramètres de sécurité "securityParameters" suit la syntaxe suivante:
FmkNoldentification ::= INTEGER

La déclaration d'une application travaillant de manière dynamique pour une autre application est produite en émettant une requête d'action de type CMIS. Pour cette déclaration, les principaux paramètres sont contenus dans l'argument "Actionlnfo" et la syntaxe Asn 1 est la suivante:

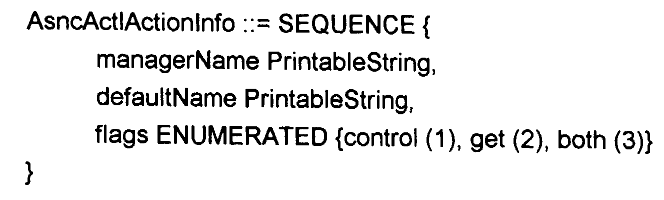

Le paramètre "ManagerName" correspond au nom de l'application travaillant pour une autre application, tandis que le paramètre "DefaultName" correspond au nom de l'utilisateur par défaut de l'application travaillant pour l'autre application. Les paramètres "flags" correspondent aux différents indicateurs suivants:
- control (1) : indique que l'application dont le nom est contenu dans le champ "ManagerName" travaille pour d'autres applications,
- get (2) : indique que l'application dont le nom est contenu dans le champ "ManagerName" requiert l'identification du demandeur de chaque requête de type CMIS reçue,
- both(3): indique que l'application dont le nom est contenu dans le champ "ManagerName" travaille pour d'autres applications et, de plus, requiert l'identification du demandeur de chaque requête de type CMIS reçue.

En outre, l'argument de type d'action est {1.3.12.2.1009.3.83.5.61,16.4}, tandis que l'argument de la classe d'objets d'action est {1.3,12,2,1009.3.83.5.61,16}.

Lorsqu'une requête est rejetée, un message d'échec ("event violation") relatif à "l'évènement" est généré par l'infrastructure de communications pour indiquer l'opération de type CMIS concernée dans la requête rejetée, la raison pour laquelle la requête est rejetée ainsi que l'identification du demandeur de ladite requête. Ces informations sont contenues dans l'argument "EventInfoargument" et sont conformes à la syntaxe Asn 1 suivante avec ces différentes valeurs:

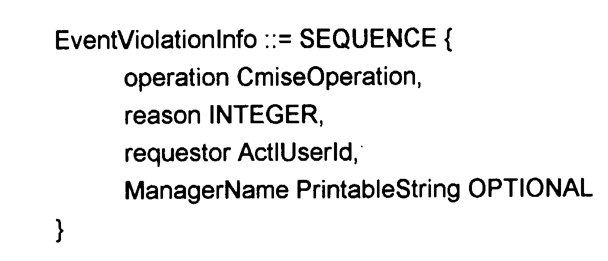

L'opération de type CMIS concernée est référencée par l'une de celles ci-dessous énumérées:

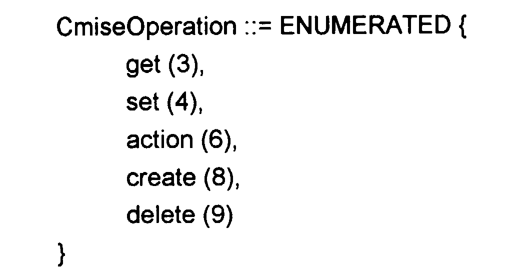

Les raisons pour lesquelles la requête est rejetée sont ci-dessous identifiées:
FWK_VIOLATION_NORMALUSER_REJ_REASON (1): lorsque le droit d'accès à l'objet concerné n'est pas autorisé à l'utilisateur normal défini par le couple (ip, uid).
FWK_VIOLATION_NORMALUSER_UNKNOWNCTX_REASON (2): lorsque l'utilisateur normal défini, par exemple, par le couple (ip, uid) n'est pas défini dans la table d'utilisateurs.
FWK_VIOLATION_NORMALUSER_BADSTATE (3): lorsque les tables internes de l'infrastructure de communications ne sont pas initialisées.
FWK_VIOLATION_NORMALUSER_NOUSER_TABLE (4): lorsque la table d'utilisateurs de l'infrastructure de communications n'est pas initialisée.
FWK_VIOLATION_NORMALUSER_NODOMAIN_TABLE (5): lorsque la table des domaines de l'infrastructure de communications n'est pas initialisée.
FWK_VIOLATION_WORKINGFORUSER_REJ_REASON (13): lorsque la requête est émise par une application travaillant pour une autre application et qu'aucun droit d'accès n'est associé à la requête.
FWK_VIOLATION_WORKINGFORUSER_UNKNOWNCTX_REASON (14): lorsque l'utilisateur, défini, par exemple, par le couple (ip, uid), pour lequel travaille l'application n'est pas défini dans la table d'utilisateurs.
FWK_VIOLATION_WORKINGFORUSER_NODEFAULT_REASON (15): lorsque le nom par défaut de l'utilisateur de l'application n'existe pas dans la table d'utilisateurs.
FWK_VIOLATION_NOCTX_ANYMORE (16): lorsque l'utilisateur n'est plus déclaré dans la table d'utilisateurs à la suite de mises à jour dynamiques de ladite table d'utilisateurs

De même le demandeur de la requête rejetée est ainsi identifié:

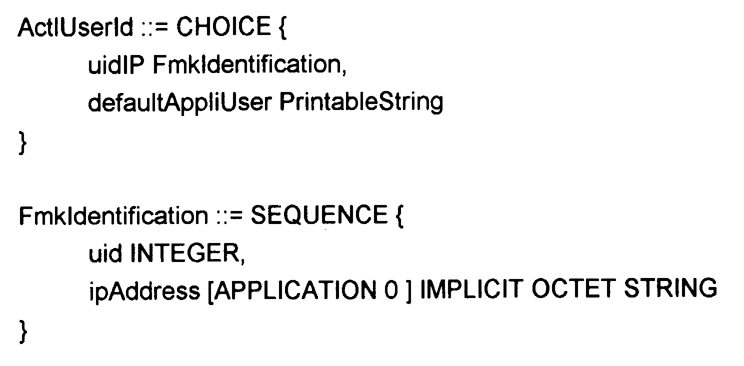

Enfin, si le demandeur de la requête rejetée est un gestionnaire, le champ "MananagerName" représente le nom de ce gestionnaire.

De plus, l'argument de type "d'événement" est {1.3.12.2,1009.3.122.1971}. L'argument de la classe d'objets et l'argument de l'instance d'objets représentent l'objet de la base d'informations de gestion MIB auquel s'appliquait la requête de type CMIS rejetée. Dans le cas d'une requête "create" du type CMIS, l'instance ne pouvant exister, une instance fictive remplace l'instance d'objets. Egalement, l'argument "moment de l'événement" représente le moment où l'échec a été constaté.

La description suivante permet de préciser premièrement les possibilités offertes (capacités) aux utilisateurs par l'infrastructure de communications et en second lieu les domaines (instances d'objets).

Il est ci-dessous proposé une description des utilisateurs de l'infrastructure de communications et des possibilités qui leur sont offertes suivie d'un exemple concret: 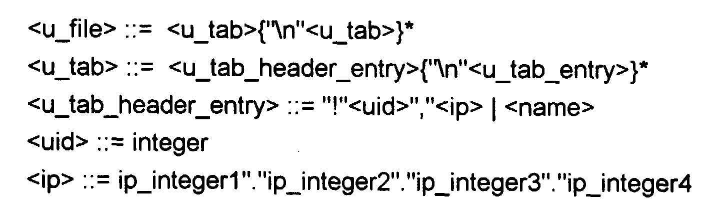 avec 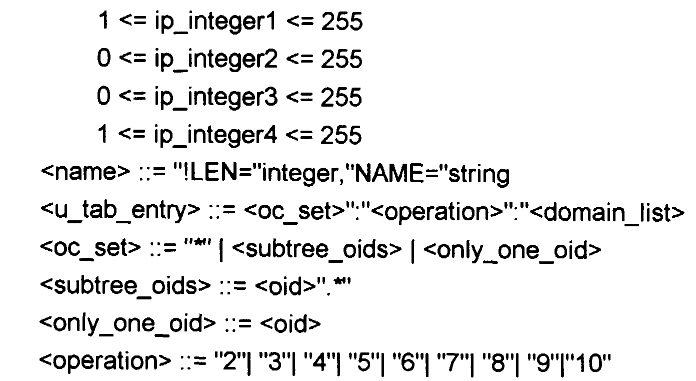 où

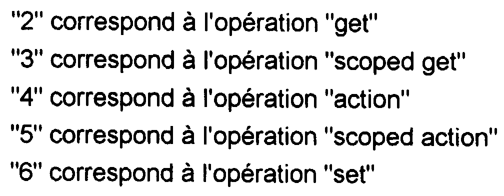

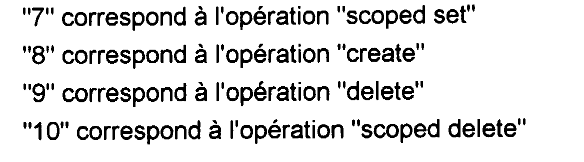

Exemple de capacités d'utilisateurs:

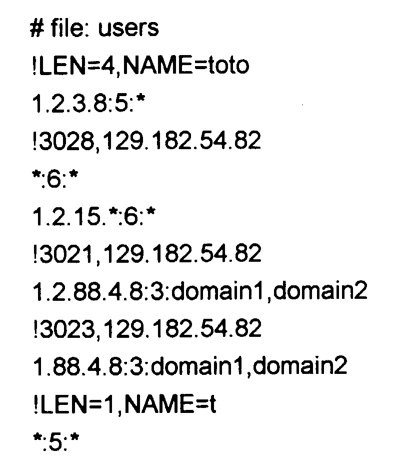

Cet exemple concret peut ainsi être commenté:
1. Un utilisateur peut être défini soit par un nom (!LEN=4,NAME=toto), soit par un couple constitué d'un identifiant uid et d'une adresse ip (!3028,129.182.54.82).
2. Il est rappelé que les opérations de type CMIS (get,..., scoped delete) sont ordonnées dans le sens croissant. De cette manière, si un utilisateur est autorisé à effectuer une opération "set" (6), il peut également effectuer les opérations de niveau inférieur, get (2), scoped get (3), action (4), scoped action (5).
3. Ensuite, associées à l'identité de l'utilisateur suivent les capacités de cet utilisateur.
4. La capacité "1.2.3.8:5:*" signifie que le détenteur de cette capacité peut effectuer des opérations du niveau get (2) jusqu'au niveau scoped action (5) sur toutes les instances d'objets existants et à venir (domaine* correspondant donc au domaine de toutes les instances possibles d'objets existants et à venir) ayant l'identifiant de classe d'objets 1.2.3.8.
5. La capacité "1.2.88.4.8:3:domain1,domain2" signifie que le détenteur de cette capacité peut effectuer des opérations du niveau get (2) jusqu'au niveau scoped get (3) sur toutes les instances définies dans les domaines (domain1,domain2) ayant l'identifiant de classe d'objets 1.2.88.4.8.
6. La capacité 1.2.15.*:6:* signifie que le détenteur de cette capacité peut effectuer des opérations du niveau get (2) jusqu'au niveau set (6) sur toutes les instances d'objets existants et à venir (domaine *) ayant comme classe d'objets existantes et à venir (classe* qui prend par convention toutes les valeurs possibles de classes) un identifiant de classe d'objets commençant par 1.2.15.

Il est à présent proposé une description des domaines (instances d'objets) de l'infrastructure de communications suivie d'un exemple concret.

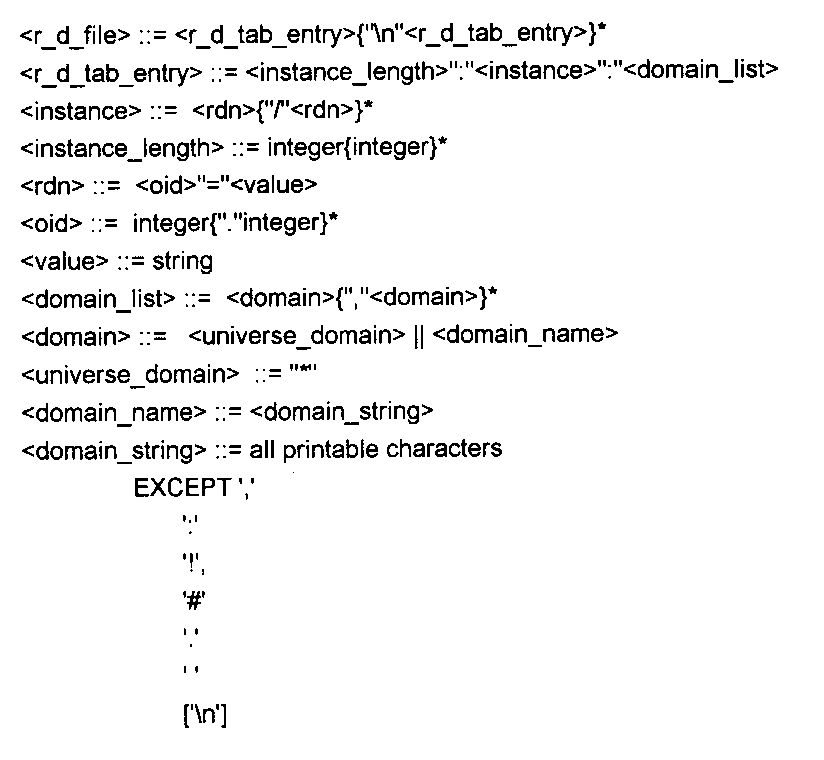

Exemple de domaines:

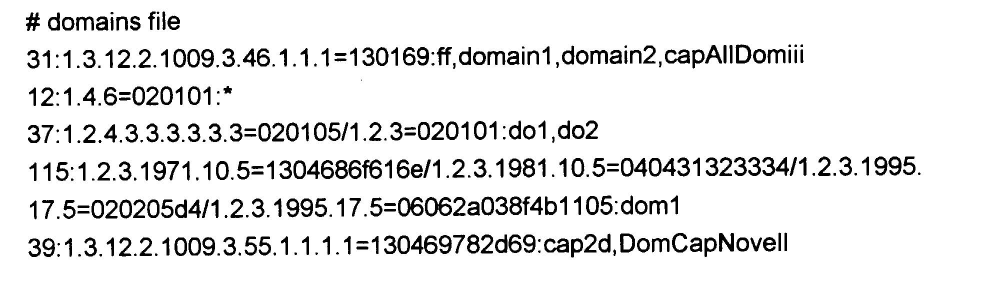

Cet exemple peut être commenté ainsi:
1. Dans le fichier "domaines", chaque instance est représentée par une longueur et une chaîne de caractères.
2. Pour chaque instance, une liste de domaines est associée, l'instance appartenant aux domaines de la liste.
3. L'instance "1.2.4.3.3.3.3.3.3=020105/1.2.3=020101" a pour longueur 37 et appartient aux domaines 1 et 2 (do1 et do2).

Pour conclure, le présent procédé de contrôle d'accès à la base d'informations de gestion via l'infrastructure de communications liant des applications permet, à partir de l'infrastructure de communications, d'avantageusement contrôler tout objet, puisqu'un contrôle d'accès à la base d'informations de gestion d'un utilisateur d'une application, directement ou indirectement connectée à ladite infrastructure de communications, est effectué au niveau exact d'un objet ou d'un ensemble d'objets précisément déterminés et appartenant à une quelconque classe répertoriée dans la base de données, mais également au niveau des opérations désirées réalisées, selon la requête émise, sur des instances d'un ou plusieurs desdits objets déterminés. Ceci est autorisé du fait que sont judicieusement exploitées l'ensemble des caractéristiques de finesse et de précision présentées par un protocole administratif, de préférence le protocole CMIP avec ses fonctions particulières. Avec ce procédé et avec le protocole CMIS/CMIP qui permet d'aider efficacement à l'unification d'un ensemble d'objets à traiter, un quelconque ensemble d'objets hétérogènes peut être aisément administré alors qu'avec les procédés de l'art antérieur, chaque protocole nécessitait une application particulière. Egalement de manière fondamentale, alors que l'application ou l'utilisateur d'une application directement connectée à l'infrastructure de communications est identifié au moyen de son adresse et de son identifiant ou au moyen d'une chaîne de caractères, autorisant, lorsque l'utilisateur est reconnu, la connection et l'accès aux droits définis dans la base de données, dans le cas où une première application est indirectement connectée à l'infrastructure de communications par l'intermédiaire d'une seconde application directement connectée à l'infrastructure de communications sous un nom particulier, les requêtes et les réponses aux requêtes transitant par la seconde application, si la seconde application travaillant alors pour la première application donne avec l'émission de la requête l'identité de l'utilisateur de la première application, l'infrastructure de communications contrôle la requête comme si cette première application avait envoyé directement ladite requête, alors que si la seconde application ne précise pas, dans la requête, l'identité de la première application, l'infrastructure de communications réalise le contrôle en utilisant les droits par défaut d'un utilisateur de la seconde application si cet utilisateur est défini tandis que si ce dernier n'est pas défini, l'infrastructure de communications réalise ce contrôle en utilisant les droits d'un utilisateur particulier appelé "autre utilisateur" si ce dernier est défini dans la base de données. Selon une autre caractéristique avantageuse de l'invention, toutes les définitions des utilisateurs de l'infrastructure de communications ainsi que leurs droits relatifs sont stockés dans une base de données, de manière à ce que, lorsqu'une application demande à être connectée à l'infrastructure de communications, cette dernière puisse vérifier l'existence de l'identité de l'utilisateur dans ladite base de données pour accepter ou interdire, si l'identité n'est pas trouvée, la connexion.

## Revendications

1. Procédé de contrôle d'accès à la base d'informations de gestion via l'infrastructure de communications liant des applications, d'une application ou d'un utilisateur d'une application donnée émettant une requête vers un ou plusieurs objets spécifiés dans un environnement de gestion distribuée, caractérisé en ce que l'application ou l'utilisateur de l'application, connectée directement ou indirectement à l'infrastructure de communications, se voit contrôler ses droits d'accès définis dans un élément d'une liste dite de capacités stockée dans une base de données, une capacité étant constituée d'une classe ou d'un ensemble de classes d'objets contenant le ou les objets spécifiés et d'un ensemble d'opérations autorisées et ordonnées, l'opération correspondant à la requête émise et, si elle est autorisée, étant à effectuer sur des instances du ou des objets spécifiés de ladite classe d'objets, les objets traités étant de nature hétérogène.

2. Procédé de contrôle d'accès à la base d'informations de gestion via l'infrastructure de communications selon la revendication 1, caractérisé en ce que l'application ou l'utilisateur d'une application directement connectée à l'infrastructure de communications est identifié soit au moyen de son adresse et de son identifiant, soit au moyen de son nom répertorié par un service de nommage, autorisant, lorsque l'application ou l'utilisateur de l'application est reconnu, la connection et l'accès aux droits définis dans la base de données.

3. Procédé de contrôle d'accès à la base d'informations de gestion via l'infrastructure de communications selon la revendication 1, caractérisé en ce que, dans le cas où une première application est indirectement connectée à l'infrastructure de communications par l'intermédiaire d'une seconde application directement connectée à l'infrastructure de communications sous un nom particulier, les requêtes et les réponses aux requêtes transitant par la seconde application, si la seconde application travaillant alors pour la première application donne avec l'émission de la requête l'identité de l'utilisateur de la première application, l'infrastructure de communications contrôle la requête comme si cette première application avait envoyé directement ladite requête, alors que si la seconde application ne précise pas, dans la requête, l'identité de la première application, l'infrastructure de communications réalise le contrôle en utilisant les droits par défaut d'un utilisateur de la seconde application si cet utilisateur est défini tandis que si ce dernier n'est pas défini, l'infrastructure de communications réalise ce contrôle en utilisant les droits d'un utilisateur particulier appelé "autre utilisateur" si ce dernier est défini dans la base de données.

4. Procédé de contrôle d'accès à la base d'informations de gestion via l'infrastructure de communications selon l'une des revendications 1 à 3, caractérisé en ce que, chaque requête émise est testée relativement aux droits d'accès d'un utilisateur d'une application ou d'une application, ce test consistant à vérifier le type de la requête et son niveau dans une suite ordonnée de requêtes, la classe d'objets requise qui peut être être une classe autorisée ou une classe appartenant à l'ensemble des classes autorisées défini dans une capacité et l'appartenance de l'instance d'objets requise à un ensemble d'instances d'objets autorisé appelé domaine.

5. Procédé de contrôle d'accès à la base d'informations de gestion via l'infrastructure de communications selon l'une des revendications précédentes, caractérisé en ce que, chaque requête émise est testée relativement aux droits d'accès des utilisateurs, ces droits étant définis de façon non énumérative sur des classes non encore connues et des instances non encore découvertes de telle manière que:
- les classes d'objets testées ou un ensemble de classes d'objets testées aient un radical commun et notamment la classe* (classe étoile) désignant toutes les classes existantes et à venir,
- un domaine d'instances d'objets soit défini comme un ensemble d'instances d'objets existants et à venir appelé domaine* (domaine étoile),
- par la définition d'une requête scopée sur un domaine, un utilisateur d'une application ait accès à toutes les instances d'objets appartenant à ce domaine mais aussi aux instances d'objets qui sont hiérarchiquement inférieures relativement auxdites instances d'objets appartenant à ce domaine dans la base d'informations de gestion.
